Europäisches Patentamt

European Patent Office

Office européen des brevets

(11) Veröffentlichungsnummer: **0 493 793 A1**

# EUROPÄISCHE PATENTANMELDUNG

(21) Anmeldenummer: **91122232.1**

(51) Int. Cl.⁵: **F27B 9/24**

(22) Anmeldetag: **24.12.91**

(30) Priorität: **28.12.90 DE 4042097**

(43) Veröffentlichungstag der Anmeldung:
**08.07.92 Patentblatt 92/28**

(84) Benannte Vertragsstaaten:
**DE ES FR GB NL**

(71) Anmelder: **Hoechst CeramTec
Aktiengesellschaft
Wilhelmstrasse 14
W-8672 Selb(DE)**

(72) Erfinder: **Pollak, Wolfgang
Reichenbacher Weg 45
W-8672 Selb(DE)**
Erfinder: **Skierlo, Erwin
Erlenweg 8
W-8590 Marktredwitz(DE)**
Erfinder: **Gerlich, Harald
Griesstrasse 1
W-8590 Marktredwitz(DE)**

(74) Vertreter: **Spiess, Bernhard et al
Hoechst AG Zentrale Patentabteilung
Postfach 80 03 20
W-6230 Frankturt am Main 80(DE)**

(54) **Verfahren zum Brennen von keramischen Formkörpern.**

(57) Die Formkörper die auch organische Komponante enthalten werden am Eingabeende einer auf die Brenntemperatur der Keramik beheizten Vibrationsrinne eingebracht und am tieferen Ende der Vibrationsrinne wieder entnommen. Die Verweilzeit der Formkörper in der Vibrationsrinne beträgt 5 bis 60 Minuten.

Die vorliegende Erfindung betrifft ein Verfahren zum gleichzeitigen Brennen einer Vielzahl keramischer Formkörper in einer beheizten Vibrationsrinne

Bisher werden keramische Massenartikel hauptsächlich in Kammeröfen, mit Brennschachteln oder in Tunnelöfen gebrannt. Dabei müssen die Artikel auf oder in Brennhilfsmittel, wie z. B. Brennkapseln, gestellt werden. Um ein Ankleben der keramischen Teile an den Brennhilfsmitteln oder untereinander zu vermeiden, müssen Trennmittel, beispielsweise kugelförmiges Aluminiumoxid sehr kleiner Korngröße, die Kontaktflächen bedecken. Das Befüllen, Entleeren und Reinigen der Brennkapseln sowie das Säubern der keramischen Bauteile von Trennmitteln ist sehr zeitaufwendig. Der zur Verfügung stehende Brennraum kann schlecht ausgenutzt werden, da das Volumenverhältnis Brenngut/Brennhilfsmittel niedrig ist.

Ein weiterer Nachteil besteht darin, daß die Thermoschockbeständigkeit der - aus gebrannter Keramik bestehenden - Brennhilfsmittel begrenzt ist und sich daher die Verweilzeit der zu brennenden Körper im Ofen in erster Linie nach der Thermoschockbeständigkeit der Brennhilfsmittel richtet. Durchlaufzeiten von bis zu 24 Stunden kommen auch bei kleinen Massenartikeln vor.

Die Kosten für Anschaffung und Bevorratung der Brennhilfsmittel sind hoch. Bei Verwendung von Trennmitteln werden zusätzliche Arbeitsschritte, wie Aufbringen und Entfernen von der Unterlage, nötig. Unbeabsichtigtes Kristallwachstum im Bauteil und im Trennmittel ist unvermeidlich, begrenzt die Lebensdauer der Trennmittel und führt zu weiteren Kosten.

Es bestand daher die Aufgabe, ein Verfahren zum Brennen von keramischen Massenteilen anzugeben, bei dem weder Brennhilfsmittel noch Trennmittel nötig sind.

Es wurde nun ein Verfahren zum Brennen grüner keramischer Formkörper, die organische Komponenten enthalten, gefunden, das dadurch gekennzeichnet ist, daß man die grünen keramischen Formkörper am Eingabeende einer auf die Brenntemperatur der Keramik beheizten Vibrationsrinne einbringt, wonach die Formkörper die Rinne langsam durchwandern und dabei auf die Brenntemperatur aufgeheizt werden, und daß man die gebrannten keramischen Formkörper am anderen Ende der Vibrationsrinne entnimmt. Vorzugsweise ist die Rinne geneigt und man gibt die grünen Formkörper am oberen Ende auf.

Die organischen Komponenten sind Bindemittel z.B. auf Basis von Cellulosederivaten und/oder Polyvinylacetat und gegebenenfalls Plastifiziermittel. Für das erfindungsgemäße Verfahren eignen sich besonders keramische Formkörper mit kleinen Abmessungen und kleinen Wanddicken. Bei kleinen Teilen ist die Ersparnis durch den Wegfall der Handarbeit beim Aufstellen auf Brennhilfsmittel besonders groß. Kleine Wanddicken erlauben ein schnelles Aufheizen der Körper im Ofen und eine unproblematische Abgabe von gasförmigen, aus den organischen Komponenten entstehenden Verbrennungsprodukten oder Zersetzungsprodukten. Je kleiner die Formkörper sind, umso mehr können gleichzeitig gebrannt werden.

Besonders bevorzugt sind Formkörper in Stäbchenform, insbesondere in Form von Zylindern oder Hohlzylindern, weil es bei diesen leicht zu erreichen ist, daß sie den Ofen mit gleichförmiger Geschwindigkeit und engem Verweilzeit-Spektrum durchwandern. Das Verfahren eignet sich aber auch zur Herstellung von nicht rotationssymmetrischen Bauteilen, z.B. von Überspannungsableitern, Dichtscheiben, Potentiometerbauteilen und trockengepreßten Pins.

Die Vibrationsrinne kann aus Metall, vorzugsweise aus Wolfram bestehen. Günstiger ist der Einsatz einer Rinne aus hochtemperaturbeständiger Keramik. Die im Ofen durch eine Heizung erreichte Temperatur entspricht der Brenntemperatur des eingesetzten grünen keramischen Materials. Die Isolierung der Heizquelle umgibt die Vibrationsrinne mindestens teilweise.

Vorzugsweise werden die beiden Enden der Vibrationsrinne nicht beheizt. Auf diese Weise kann man erreichen, daß die eingefüllten grünen Keramikkörper langsam aufgeheizt werden, in der Mitte der Rinne ein Temperaturmaximum durchlaufen und das Ende der Rinne abgekühlt wieder verlassen. Bevorzugt ist eine Verweildauer in der Rinne von 5 bis 60 Minuten.

Mit dem angegebenen Verfahren ist es möglich, die Brenndauer (Verweildauer in der Rinne) auf wenige Minuten zu senken. Es weist daher eine hohe Raum-Zeit-Ausbeute auf. Ein weiterer wesentlicher Vorteil besteht darin, daß sich das erfindungsgemäße Verfahren ohne weiteres kontinuierlich betreiben läßt.

Mit dem angegebenen Verfahren ist es überraschend möglich, die Brenndauer, d.h. die Verweildauer in der Rinne auf wenige Minuten zu senken und dadurch Energie und Kosten einzusparen. Das erfindungsgemäße Verfahren zeichnet sich daher durch eine hohe Raum-Zeit-Ausbeute aus.

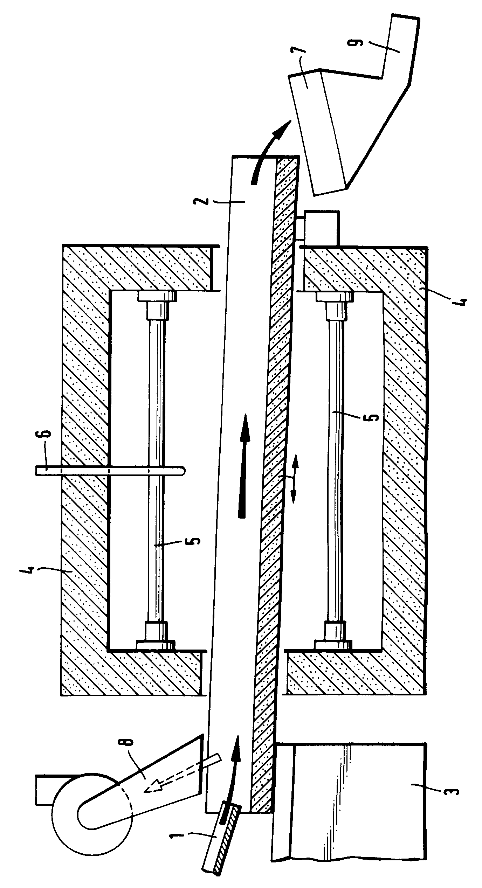

Die beigefügte Zeichnung soll beispielhaft die Erfindung noch näher erläutern, ohne daß sich daraus jedoch Einschränkungen auf die konkret dargestellte Ausführungsform ableiten lassen sollen.

Die einzige Figur zeigt einen senkrechten Schnitt durch einen keramischen Brennofen, der für das erfindungsgemäße Verfahren eingesetzt werden kann, in seitlicher Ansicht.

Mit Bezugzeichen ist die Vibrationsrinne (2), die mit dem elektromagnetischen Antrieb (3) in periodische Längsbewegung versetzt wird, besonders hervorgehoben. Ferner die Ofenisolierung (4) aus Keramik und die elektrischen Heizstäbe (5). Durch Verändern der Abmessungen von Isolierung und Heizstrecke läßt sich das Temperaturprofil längs der Rinne beeinflussen. Die grünen keramischen Formkörper gelangen durch die Zuführrinne (1) - die z.B. eine unbeheizte Vibrationsrinne sein kann - in die beheizte Rinne (2) durchwandern diese und verlassen sie am unteren Ende. Sie fallen dann in das Auffangsieb (7) und die Teileabführrinne (9). Das Thermoelement (6) kontrolliert die nötige Temperatur in Nähe der Ofenmitte. Die bei der thermischen Zersetzung der Bindemittel und Plastifizierung entstehenden gasförmigen Produkte werden am oberen Rinnenende bei (8) abgesaugt.

Bei einer in der Hauptsache in der Mitte beheizten Rinne entsteht durch Wärmeleitung und Konvektion ein Temperaturgefälle nach beiden Seiten. Es bildet sich eine Aufheizphase am Beginn der Rinne aus, bei der das Bindemittel entfernt wird und verbrennt, eine Haltephase zum Dichtsintern in der Mitte und eine Abkühlphase am anderen Rinnenende. Die Verweilzeit in der Rinne (2) kann durch Variation des Neigungswinkels der Rinne und der Frequenz und der Amplitude des Antriebs leicht den jeweiligen Bedürfnissen angepaßt werden. Sie ist ferner proportional der Länge der Rinne. Die relative Bewegung von Bauteilen und Rinne ermöglicht eine schnelle und gleichmäßige Durchwärmung. Ein Zusammenkleben der Bauteile wird wirksam verhindert.

Die Rinne hat vorzugsweise ein U-förmiges Profil. Sie ist mit dem Vibrator eingabeseitig verbunden und auf der anderen Seite elastisch aufgehängt.

**Patentansprüche**

1. Verfahren zum Brennen grüner keramischer Formkörper, die organische Komponenten enthalten, dadurch gekennzeichnet, daß man die grünen keramischen Formkörper am Eingabeende einer auf die Brenntemperatur der Keramik beheizten Vibrationsrinne einbringt, und daß man die gebrannten keramischen Formkörper am anderen Ende der Vibrationsrinne entnimmt.

2. Verfahren nach Anspruch 1, dadurch gekennzeichnet, daß die Zone in der Mitte der Vibrationsrinne beheizt ist.

3. Verfahren nach Anspruch 1, dadurch gekennzeichnet, daß man Formkörper einbringt, die stabförmig sind.

4. Verfahren nach Anspruch 1, dadurch gekennzeichnet, daß man eine Verweilzeit zwischen 5 und 60 Minuten in der Vibrationsrinne einstellt.

5. Verfahren nach Anspruch 1, dadurch gekennzeichnet, daß die Vibrationsrinne vom Eingabeende zum Entnahmeende hin nach unten geneigt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 000 717 (G.BARNONI) <br> * Ansprüche 1-4; Abbildungen * <br> --- | 1,2,3 | F27B9/24 |
| A | US-A-1 695 950 (C.H.CARPENTER) <br> * Ansprüche 1-8; Abbildungen * <br> --- | 5 | |
| A | DE-A-1 807 216 (SCHILDE AG) <br> --- | 1,2,3 | |
| A | FR-A-2 242 649 (AEG) <br><br> ----- | | |
| | | | **RECHERCHIERTE SACHGEBIETE (Int. Cl.5)** |
| | | | F27B |

Der vorliegende Recherchenbericht wurde für alle Patentansprüche erstellt

| Recherchenort | Abschlußdatum der Recherche | Prüfer |
|---|---|---|
| DEN HAAG | 20 FEBRUAR 1992 | COULOMB J.C. |

EPO FORM 1503 03.82 (P0403)